Europäisches Patentamt

**European Patent Office**

Office européen des brevets

(11) Veröffentlichungsnummer: **0 045 477**
**B1**

(12) **EUROPÄISCHE PATENTSCHRIFT**

(45) Veröffentlichungstag der Patentschrift:
**10.10.84**

(21) Anmeldenummer: **81105957.5**

(22) Anmeldetag: **28.07.81**

(51) Int. Cl.³: **F 24 H 9/12, F 16 L 25/00**

(54) Anschlussarmatur für das Anbringen eines neuen Ventils an einen bestehenden Heizkörper einer Zentralheizung.

(30) Priorität: **04.08.80  CH 5880/80**

(43) Veröffentlichungstag der Anmeldung:
**10.02.82 Patentblatt 82/6**

(45) Bekanntmachung des Hinweises auf die Patenterteilung:
**10.10.84 Patentblatt 84/41**

(84) Benannte Vertragsstaaten:
**AT BE CH DE FR GB IT LI LU NL SE**

(56) Entgegenhaltungen:
**EP - A - 0 039 476**
**CH - A - 445 066**
**DE - A - 1 925 477**
**DE - A - 2 025 034**

**Die Akte enthält technische Angaben, die nach dem Eingang der Anmeldung eingereicht wurden und die nicht in dieser Patentschrift enthalten sind.**

(73) Patentinhaber: **Guggisberg, Hans-Rudolf,
Hohgantweg 17, CH-3012 Bern (CH)**

(72) Erfinder: **Guggisberg, Hans-Rudolf, Hohgantweg 17,
CH-3012 Bern (CH)**

(74) Vertreter: **Troesch, Hans Alfred, Dr. Ing. et al,
Walchestrasse 19, CH-8035 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft eine Anschlußarmatur für das Anbringen eines neuen Ventils an einen bestehenden Heizkörper einer Zentralheizung.

Radiatorventile sind im allgemeinen heute mit einem Einschraubnippel am Radiator und einer Überwurfmutter, die den Nippelflansch an das Ventilende anpreßt, montiert. Diese Lösung ist für die Erstmontage von Radiator und Ventil sehr wirtschaftlich. Dafür ist ein Auswechseln des Ventils nur durch Lösen beider Rohrstränge und Verschieben des Radiators mit beträchtlichem Aufwand möglich. Dabei ist insbesondere das Abstimmen der beiden Rohrlängen bei ändernden Ventillängen schwierig und kann zu Verspannungen führen. Dieses Auswechseln wurde aber in der Vergangenheit nur ganz selten bei gewissen Defekten am Ventil nötig.

Es ist eine sog. Ausgleichsverschraubung für Heizkörper oder andere an Rohrleitungen anzuschließende Bauteile, bekanntgeworden, bei welcher das mit der Rohrleitung zu verbindende Element der Verschraubung eine zylindrische Hülse aufweist, die in dem als Stopfbüchse ausgebildeten und am Heizkörper od. dgl. zu befestigenden Element verschiebbar geführt ist. Diese Idee der als Stopfbüchse verschiebbar ausgebildeten Hülse der Verschraubung erlaubt deren relativ einfachen Aufbau unter Berücksichtigung der Ausdehnung von Heizkörper und Leitungen beim Erwärmen bzw. des Zusammenziehens bei deren Abkühlung, wodurch Spannungen und Geräusche vermieden werden können (DE-A-2 025 034).

Zum Stande der Technik gehört ferner eine Vorrichtung zum Anschluß von Ventilen oder Verschraubungen an Heizkörpern, mit einem an den Heizkörper anschließbaren Stopfen, der an seiner dem Heizkörper abgewandten Stirnseite ein Verbindungsstück aufweist, dessen dem Stopfen abgewandte Stirnseite an das Ventil oder die Verschraubung anschließbar ist. Bei dieser Vorrichtung ist das Verbindungsstück als Stutzen ausgebildet, der mit dem Stopfen aus einem Stück hergestellt ist. Diese Vorrichtung weist den Vorteil auf, daß es zwischen dem Stopfen und der Verbindung der Vorrichtung zum Abgangsstutzen des Ventils oder der Verschraubung nicht mehr zu Undichtheiten kommen kann, bei der vielmehr das Verlängerungsstück bekannter Ausführung ganz vermieden ist. Damit werden auch Undichtheiten, wie sie bei Heizungen mit hohen Betriebstemperaturen, z. B. bei Heißwasser- und Dampfheizungen auftreten, vermieden (CH-A-445 066).

Gemäß Art. 54, Absatz 3 des Europäischen Patentübereinkommens gehört bezüglich Neuheit auch die nachveröffentlichte europäische Patentanmeldung 0 039 476 zum Stande der Technik. Dieser Anmeldung wird zur Aufgabenstellung folgendes entnommen.

Im Zuge der Energiesparmaßnahmen werden in zunehmendem Maße die bisher üblichen Heizkörperventile, die einfache Handregulierventile waren, durch andere Ventile, insbesondere durch Thermostatventile, ersetzt. Diese Thermostatventile haben aber meistens eine größere Baulänge als die bisher eingesetzten Heizkörperventile. Bevor deshalb ein Thermostatventil anstelle eines vorhandenen Ventils eingesetzt werden kann, muß deshalb entweder die Anschlußleitung verkürzt werden oder der Heizkörper versetzt werden. Beides erfordert einen erheblichen Arbeits- und Zeitaufwand. Das Verkürzen der Anschlußleitungen läßt sich meist nur mit Hilfe autogener Schweißung durchführen. Zusätzlich muß das neue Ende der Anschlußleitung mit einem Gewinde versehen werden. Das sind sehr mühsame Arbeiten, die noch dadurch erschwert werden, daß Heizkörper sich in der Regel in Heizkörpernischen befinden, die schwer zugänglich sind. In einigen Fällen sind auch die freien zur Verfügung stehenden Längen der Anschlußleitungen begrenzt. Ähnliches gilt auch für das Versetzen der Heizkörper selbst. Überwiegend sind dafür zwei Monteure notwendig, die im Durchschnitt je ca. 1 Stunde für diese Arbeiten benötigen.

Aufgabe dieser Lösung war es, das Auswechseln von Heizkörperventilen an Heizkörpern durch andere Ventile, insbesondere Thermostatventile, zu vereinfachen.

Diese Aufgabe wurde dadurch gelöst, daß der Heizkörperanschluß-Stopfen unter Zwischenschaltung einer Dichtung drehbar und längsverschieblich auf der Anschlußtülle angeordnet ist.

Die vorliegende Erfindung befaßt sich mit dem gleichen Problem, wie die EPA 00 039 467, bezweckt aber zusätzlich eine Anschlußarmatur zu schaffen, welche mit kleinstmöglichen Einbaulängen, d. h. mit kleineren Einbaulängen als die bisher bekannten Konstruktionen, auskommt, einfach im Einbau ist und trotzdem einen absolut sicheren tropffreien Betrieb ermöglicht.

Die zum Stande der Technik gehörenden vorerwähnten Konstruktionen ergeben, unter sonst gleichen Bedingungen, d. h. bei gleicher Ventillänge, gleichen Gewindegrößen, mit normalisierten Überwurfmuttern und gleichen Anschlußdimensionen der Heizkörper größere Einbaulängen als die vorliegende Konstruktion.

Der Grund liegt darin, daß die sich zur Optimalisierung der gestellten Aufgabe im Sinne der Erfindung eines U-förmigen, scheibenförmigen Einschiebestückes bedient, welches zum wasserdichten Montieren dient und in den Zwischenraum zwischen den Abschlußflansch und die Überwurfmutter einschiebbar ist, wobei der Flanschdurchmesser kleiner ist als der kleinste Durchmesser der Überwurfmutter und der Außendurchmesser des Einschiebestückes größer ist als der kleinste Durchmesser der Überwurfmutter.

Durch diese Maßnahme wird die Baulänge, welche für den Einbau neuer Ventile in bestehende Heizungssysteme unbedingt benötigt wird, merklich verkleinert, wodurch die Wahrscheinlichkeit, komplizierte Anpaßarbeiten, Lösen von Heizkörpern, Verkürzen von Leitungen vornehmen zu müssen, im wesentlichem Maße schwindet und solche Anpaßarbeiten bei Verwendung der erfindungsgemäßen Lösung in der Praxis kaum mehr auftreten.

Ausführungsbeispiele der Erfindung werden nachstehend anhand einer Zeichnung näher erläutert. Es zeigt

Fig. 1 die Gesamtlage mit Heizkörper und Rohranschlüssen nach Entfernen des zu ersetzenden Ventils (z. B. durch Aufsägen und Abschrauben der beiden Teile Ventil und Nippel, strichpunktiert),

Fig. 2 eine Anschlußarmatur im Längsschnitt, nach der Montage des neuen Ventils,

Fig. 3 eine Zwischenscheibe in Ansicht,

Fig. 4 eine Ausführungsvariante analog Fig. 2.

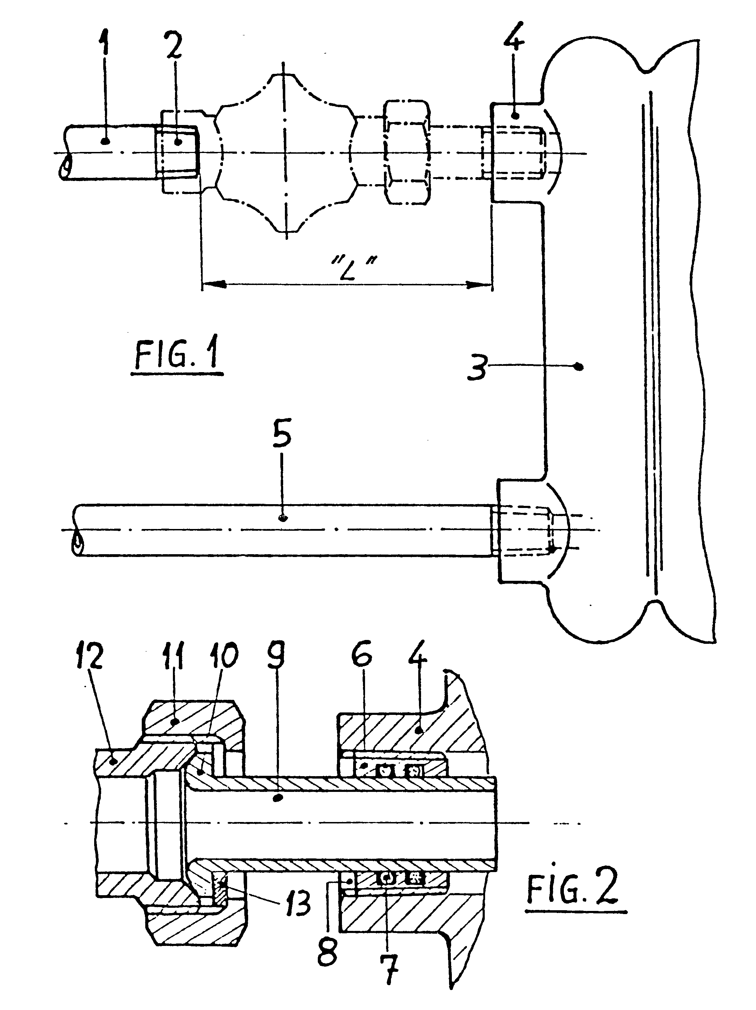

In Fig. 1 bezeichnet 1 eine Vorlaufleitung einer Zentralheizungsanlage mit dem konischen Gewindeende 2. Ein Heizkörper 3 weist ein Vorlaufanschlußgewinde 4 auf. Eine Rücklaufleitung 5 ist mit dem Radiator 3 fest verschraubt. Somit steht für die Montage des neuen Anschlußnippels und des neuen Ventils nun die freie Länge »L« zur Verfügung. Beim Aufschrauben des Ventilkörpers auf das Gewinde 2 entfernt sich dieses vom Radiator 3.

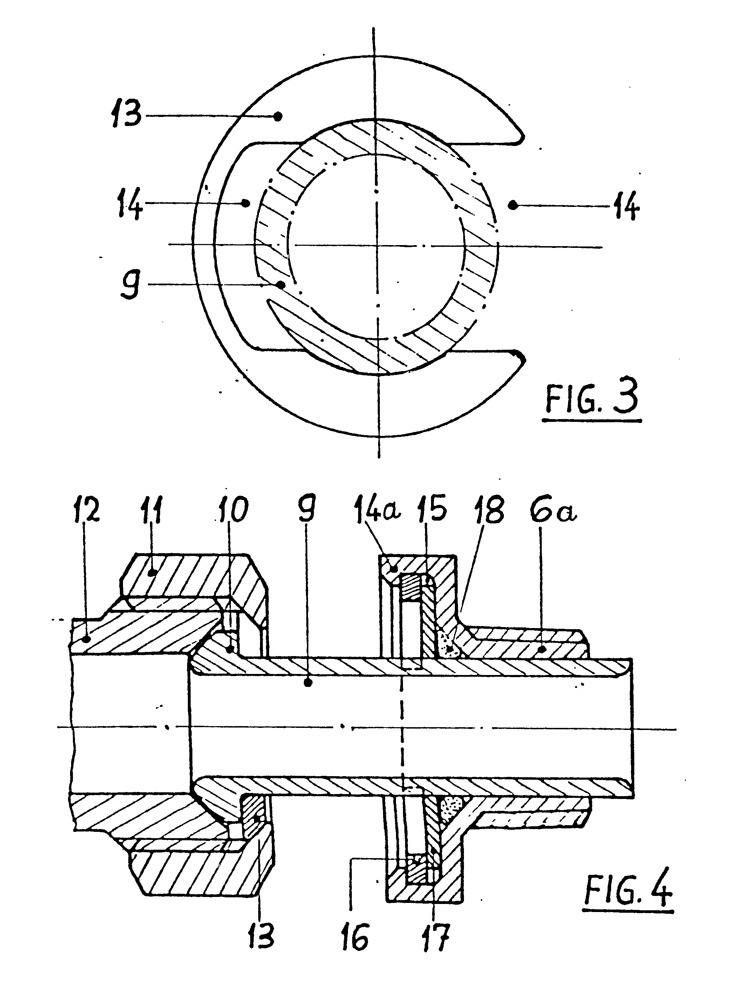

Die in Fig. 2 eingebaute Armatur besteht aus einem Einschraubnippel 6 mit zwei Dichtringen 7. Der Nippel 6 kann mittels der Schlitze 8 in das Gewinde 4 des Radiators 3 eingeschraubt werden. Im Inneren des Nippels 6 ist ein längsbewegliches Anschlußrohr 9 dichtend gelagert, dessen Kopfpartie als Abschluß-Flansch 10 ausgebildet, mittels einer Überwurfmutter 11 mit einem Ventilkörper 12 dicht verschraubt ist, wenn eine Zwischenscheibe 13 (Fig. 3) eingefügt ist. Deren Aussparung 14 ermöglicht das Aufschieben quer auf das Rohr 9. Dadurch kann bei der Montage des Ventils so vorgegangen werden, daß das Rohr 9 ganz an den Nippel 6 herangeschoben wird, wenn das Ventil (ev. mit der aufgeschraubten Mutter 11) auf das Rohrende 2 aufgewinde wird. Um ein vorheriges seitliches Einschieben des Ventils in seine Lage für dieses Aufgewinden zu ermöglichen, muß das Maß »L« im Minimum die Ventillänge, vermehrt um die Länge des Flansches 10 betragen. Nachher kann das Anschlußrohr 9 gegen das Ventil hin und die Mutter 11 gegen den Radiator hin geschoben werden, so daß dann die Zwischenscheibe 13 zwischen Flansch 10 und der Mutter 11 von der Seite her auf das Rohr 9 aufgeschoben werden kann. Wird alsdann die Mutter 11 mit dem Ventilgewinde verschraubt, wird durch die Scheibe 13 der Flansch 10 dicht an das Ventil angedrückt. Dabei kann sich das Rohr 9 in Abhängigkeit von »L« dicht und ohne jegliche Anpaßarbeit im Nippel 6 längs verschieben. Die Zwischenscheibe 13 ist klammerartig in Form eines Segerringes ausgebildet.

Wenn »L« groß genug ist, kann ohne Scheibe 13 gearbeitet werden, wobei der Durchmesser des Flansches 10 größer wäre als der kleinste Durchmesser der Überwurfmutter 11.

In Fig. 4 ist neben den bekannten Elementen ein Nippel 6a mit einem Kopfstück, das als Abschluß-Flansch 14a ausgebildet ist, ersichtlich. Dieser Flansch 14 ist außen vorzugsweise 6kantig (zum Einschrauben) ausgeführt. Innen weist dieser eine Nut 15 auf, in der ein Sperr- oder Spreizring 16 mit einer Öffnung am Umfang von etwa der Breite des Durchmessers des Rohres 9 eine Scheibe 17 axial so festhält, daß sie einen Dichtungsring 18 dichtend gegen den Nippel 6a und das Rohr 9 drückt.

Diese Lösung hat den Vorteil, daß das Rohr 9 bei der Montage praktisch reibungsfrei axial verschoben werden kann, wenn der Sperring 16 noch nicht montiert ist.

## Patentansprüche

1. Anschlußarmatur für das Anbringen eines neuen Ventils an einen bestehenden Heizkörper (3) einer Zentralheizung, mit einem Einschraubnippel (6) und einem dicht in diesem geführten, längs im Nippel (6) verschiebbaren Rohr (9) mit Abschlußflansch (10) und einer, den Abschlußflansch (10) zwecks Verbindung mit dem Ventil fassenden Überwurfmutter (11), dadurch gekennzeichnet, daß der Flanschdurchmesser kleiner ist als der kleinste Durchmesser der Überwurfmutter, und daß zum wasserdichten Montieren ein U-förmiges, scheibenförmiges Einschiebestück (13) vorgesehen ist, welches in den Zwischenraum zwischen den Abschlußflansch (10) und die Überwurfmutter (11) einschiebbar ist, wobei der Außendurchmesser des Einschiebestückes (13) größer ist, als der kleinste Durchmesser der Überwurfmutter (11).

2. Anschlußarmatur nach Anspruch 1, dadurch gekennzeichnet, daß der Schraubnippel als Außengewindehülse (6) mit Vertiefungen (8) zum vollständig versenkten Einschrauben in den Heizkörper (3, 4) ausgebildet ist.

3. Anschlußarmatur nach Anspruch 1, dadurch gekennzeichnet, daß das Zwischenstück (13) klammerförmig ausgebildet und, vorzugsweise in der Art eines Segerringes, am Flansch anliegend, auf das Rohr aufklemmbar ist.

4. Anschlußarmatur nach Anspruch 2, dadurch gekennzeichnet, daß die Außengewindehülse (6) mindestens eine Innennut zur Aufnahme einer Dichtung (7) aufweist.

5. Anschlußarmatur nach Anspruch 1, dadurch gekennzeichnet, daß der Schraubnippel (6a) mit einem Flansch (14a) versehen ist, wobei in diesem eine innere Anfasung zum Einlegen einer, z. B. ringförmigen, Dichtung (18) vorgesehen ist.

6. Anschlußarmatur nach Anspruch 5, dadurch gekennzeichnet, daß das im Flansch (14a) des Nippels (6a) ein inneres Auflager für einen Sperring (16) bzw. Sprengring mit Scheibe (17) zum Halten der Dichtung (18) vorgesehen ist.

7. Anschlußarmatur nach Anspruch 6, dadurch gekennzeichnet, daß der Sperring (16) auf das Maß des Durchmessers des Rohres (9) spreizbar ist, um ihn seitlich auf das Rohr (9) zu schieben.

**Claims**

1. Connection armature for the application of a new valve onto an existing heating body (3) of a central heating system, with a screw nipple (6) and a pipe (9) carried tightly therein and able to be moved longitudinally in the nipple (6), which pipe has a sealing flange (10), and with a coupling nut (11) holding the sealing flange (10) for the purpose of connection with the valve, characterized in that the flange diameter is smaller than the smallest diameter of the coupling nut, and that for water-tight assembly a U-shaped discoid insertion piece (13) is provided, which is able to be inserted into the interstice between the sealing flange (10) and the coupling nut (11), in which the external diameter of the insertion piece (13) is greater than the smallest diameter of the coupling nut (11).

2. Connection armature according to claim 1, characterized in that the screw nipple is constructed as an externally threaded sleeve (6) with recesses (8) so as to be screwed completely countersunk into the heating body (3, 4).

3. Connection armature according to claim 1, characterized in that the intermediate piece (13) is constructed in the form of a clamp and, preferably in the manner of a Seger ring, resting against the flange, is able to be clamped onto the pipe.

4. Connection armature according to claim 2, characterized in that the externally threaded sleeve (6) has at least one internal groove to receive a seal (7).

5. Connection armature according to claim 1, characterized in that the screw nipple (6a) is provided with a flange (14a) whereby an inner chamfering is provided therein for the placement of a — for example annular — seal (18).

6. Connection armature according to claim 5, characterized in that in the flange (14a) of the nipple (6a) an inner support is provided for a locking ring (16) or snap ring with disc (17) to hold the seal (18).

7. Connection armature according to claim 6, characterized in that the locking ring (16) is able to be expanded to the measurement of the diameter of the pipe (9), in order to push it laterally onto the pipe (9).

**Revendications**

1. Dispositif de raccordement pour le montage d'un nouveau robinet sur un radiateur (3) existant d'un chauffage central, comprenant une bague de raccordement vissable (6) et un tuyau (9) monté de façon étanche dans cette dernière et pouvant se déplacer dans ladite bague de raccordement (6), comprenant une bride de raccordement (10) et un écrou à collerette (11) entourant la bride de raccordement (10) en vue de la liaison avec le robinet, caractérisé en ce que le diamètre de la bride est plus faible que le diamètre le plus faible de l'écrou à collerette et en ce qu'on prévoit pour le montage étanche à l'eau un élément enfichable en U et en forme de disque (13) qui peut être enfoncé dans l'espace intermédiaire compris entre la bride de raccordement (10) et l'écrou à collerette (11), le diamètre extérieur de l'élément à enficher (13) étant supérieur au diamètre le plus faible de l'écrou à collerette (11).

2. Dispositif de raccordement selon la revendication 1, caractérisé en ce que la bague de raccordement vissable est constituée sous forme d'une douille à filetage externe (6) comprenant des enfoncements (8) pour permettre un vissage totalement enfoncé dans le radiateur (3, 4).

3. Dispositif de raccordement selon la revendication 1, caractérisé en ce que l'élément intermédiaire (13) est constitué en forme de pince et peut être serré sur le tuyau en étant appliqué contre la bride, de préférence à la manière d'un anneau de Seger.

4. Dispositif de raccordement selon la revendication 2, caractérisé en ce que le manchon à filetage externe (6) comprend au moins une gorge interne destinée au logement d'une garniture d'étanchéité (7).

5. Dispositif de raccordement selon la revendication 1, caractérisé en ce que la bague de raccordement vissable (6a) est munie d'une bride (14a) à l'Interérieur de laquelle est prévue une partie biseautés destinée au logement d'une garniture d'étanchéité (18), de préférence en forme d'anneau.

6. Dispositif de raccordement selon la revendication 5, caractérisé en ce qu'il est prévu dans la bride (14a) de la bague de raccordement (6a) un appui interne destiné à un anneau de serrage (16) au à un anneau d'écartement muni d'un disque (17) en vue de retenir la garniture d'étanchéité (18).

7. Dispositif de raccordement selon la revendication 6, caractérisé en ce que l'anneau de blocage (16) peut être écarté sur une distance correspondant au diamètre du tuyau (9) pour le pousser latéralement sur le tuyau (9).

FIG.1

"L"

FIG.2

FIG. 3

FIG. 4